# EUROPÄISCHE PATENTSCHRIFT

(11) **EP 0 966 869 B1**
(45) Veröffentlichungstag und Bekanntmachung des Hinweises auf die Patenterteilung: **08.05.2002**
(21) Anmeldenummer: 98910594.5
(22) Anmeldetag: 09.02.1998
(51) Int. Cl.: H05K 7/14

(54) **ELEKTRONISCHES GERÄT MIT PERIPHERIEGERÄTEAUFSATZ**
ELECTRONIC EQUIPMENT WITH PERIPHERAL TOP UNIT
APPAREIL ELECTRONIQUE AVEC PERIPHERIQUE EMPILABLE

(30) Priorität: 12.03.1997 DE 19710223
(43) Veröffentlichungstag der Anmeldung: 29.12.1999
(73) Patentinhaber: Wincor Nixdorf GmbH & Co KG, 33106 Paderborn (DE)
(72) Erfinder: BAITZ, Günter, D-13629 Berlin (DE); KAMIN, Hartmut, D-10585 Berlin (DE)
(86) Internationale Anmeldenummer: DE9800365
(87) Internationale Veröffentlichungsnummer: WO9841073

(56) Entgegenhaltungen:
- EP-A- 0 617 494
- WO-A-90/09731
- DE-A- 3 823 656
- US-A- 5 335 144
- US-A- 5 460 441

## Beschreibung

Die Erfindung betrifft ein Gerätesystem mit einem PC-basierten datenverarbeitenden Gerät und einem daran ankoppelbaren weiteren Baugruppenträger nach dem Oberbegriff des Anspruchs 1.

Aus der WO 90/09731 A1 ist ein Gerätesystem der genannten Art bekannt, bei dem ein erstes und ein weiteres elektrisches Gerät mechanisch und elektrisch miteinander kuppelbar sind. Die Geräte haben jeweils einen zur Aufnahme von Funktionsbaugruppen ausgebildeten Baugruppenträger, an denen jeweils mechanische Kupplungseinrichtungen zum Kuppeln eines Baugruppenträgers mit weiteren Baugruppenträgern angeordnet sind. Die einzelnen Baugruppenträger sind nebeneinander angeordnet, so daß die Grundfläche des Gerätesystems mit wachsender Baugruppenträgerzahl zunimmt. Auch müssen alle Baugruppenträger die gleiche Höhe haben. Das Gerätesystem soll durch eine einzige Abdeckhaube abdeckbar sein, für jede Baugruppenträgerkombination ist also eine spezielle Abdeckhaube erforderlich.

Aufgabe der Erfindung ist es daher, ein Gerätesystem mit einem Baugruppenträger anzugeben, das in einfacher Weise auch nachträglich erweiterbar ist, ohne dessen Grundfläche zu verändern.

Die Aufgabe wird durch das Kennzeichen des Anspruchs 1 gelöst.

Die Erfindung geht von der Überlegung aus, daß bei modernen Computern, insbesondere Personal Computern immer weniger elektronische Zusatzkarten zum Einsatz kommen, zum einen, weil die elektronische Grundausstattung eines solchen Computers immer umfangreicher wird, und zum anderen, weil wegen der steigenden Integrationsdichte auf einer oder wenigen Zusatzkarten die elektronischen Schaltkreise für alle Zusatzfunktionen unterzubringen sind. Es bestehen aber weiterhin stark voneinander abweichende Anforderungen hinsichtlich der Ausstattung mit Peripheriegeräten. Hierunter sind vor allem Laufwerke für Fest- und Wechselplatten, Bandkassetten, CD-ROM und Disketten sowie Schächte für Chipkarten zu verstehen.

Bildet man den weiteren Baugruppenträger als Peripheriegeräteaufsatz aus, der auf dem ersten Baugruppenträger lösbar und schwenkbar zu befestigen ist, so erfordert dies an dem ersten Baugruppenträger lediglich die vorbereitende Anbringung einer gelenkigen Verbindung. Diese kann in einer bevorzugten Ausprägung der Erfindung aus wenigstens einem schlitzförmigen Durchbruch bestehen, der aus der Vorderwand des Baugruppenträgers bei deren Oberkante und in paralleler Ausrichtung zu dieser ausgeschnitten ist. Das Gegenstück der gelenkigen Verbindung ist ein an die untere Vorderkante des Peripheriegeräteaufsatzes angeformter, U-förmiger, in Richtung der Hinterwand offener vorderer Haken. Dieser korrespondiert mit dem wenigstens einen schlitzförmigen Durchbruch.

Zum Aufsetzen des Peripheriegeräteaufsatzes auf den ersten Baugruppenträger wird der freie U-Schenkel des wenigstens einen vorderen Hakens von vorne her in den wenigstens einen Schlitz geschoben. Der Haken vermag sich dann mit seiner U-Kehle um den schmalen Steg, der den schlitzförmigen Durchbruch gegen die Oberkante der Vorderwand des Baugruppenträgers abgrenzt, zu drehen.

In Weiterbildung der Erfindung ist an die zum Geräteinneren weisende Seite der Hinterwand des ersten Baugruppenträgers wenigstens eine Auflageplatte angesetzt oder aus dieser freigestanzt und herausgebogen und an die Unterseite des Peripheriegeräteaufsatzes wenigstens ein mit dieser korrespondierender, U-förmiger, in Richtung der Hinterwand offener hinterer Haken angeformt.

Zum Aufsetzen des Peripheriegeräteaufsatzes auf den ersten Baugruppenträger wird ersterer mit seiner Unterseite vorne auf die Vorderwand und hinten auf die wenigstens eine Auflageplatte gelegt und nach hinten geschoben. Dabei greift, wie beschrieben, zuerst der vordere Haken in den Schlitz in der Vorderwand. Beim weiteren Zurückschieben untergreift der hintere Haken die Auflageplatte. Damit ist der Peripheriegeräteaufsatz auf dem ersten Baugruppenträger fixiert. Er kann in dieser Position durch eine durch die Hinterwand des ersten Baugruppenträgers greifend Schraube oder durch die aufgesetzte Haube gehalten werden. Es ist zu erkennen, daß die Befestigungsmittel an dem Baugruppenträger lediglich durch Stanz- und Biegevorgänge erzeugt werden, die in einem Arbeitsgang mit der Formgebung des Baugruppenträgers durchgeführt werden können, also keine zusätzlichen Kosten verursachen.

Es ist eine einzige Abdeckhaube für das erfindungsgemäße Gerätesystem vorgesehen. Die Vorderwand der Abdeckhaube ist im Vorderwandbereich des Peripheriegeräteaufsatzes mit wenigstens einem Durchbruch für ein Bedienelement eines Peripheriegerätes versehen. Zum Schutz gegen unberechtigten Zugriff auf die Peripheriegeräte ist die Abdeckhaube mit einer verschließbaren Abdeckung versehen, die zwischen einer den Vorderwandbereich überdeckenden und einer diesen freigebenden Position verstellbar ist.

Die Abdeckung kann als parallel zu sich selbst verschiebliche Platte oder als muldenförmige, um eine horizontale oder vertikale Achse schwenkbare Kappe ausgebildet sein.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutern. Es zeigt
- Fig. 1: eine Explosionsdarstellung eines Gerätesystems ohne Abdeckhaube in perspektivischer Ansicht,
- Fig. 2: das zusammengefügte Gerätesystem mit Abdeckhaube in perspektivischer Ansicht.

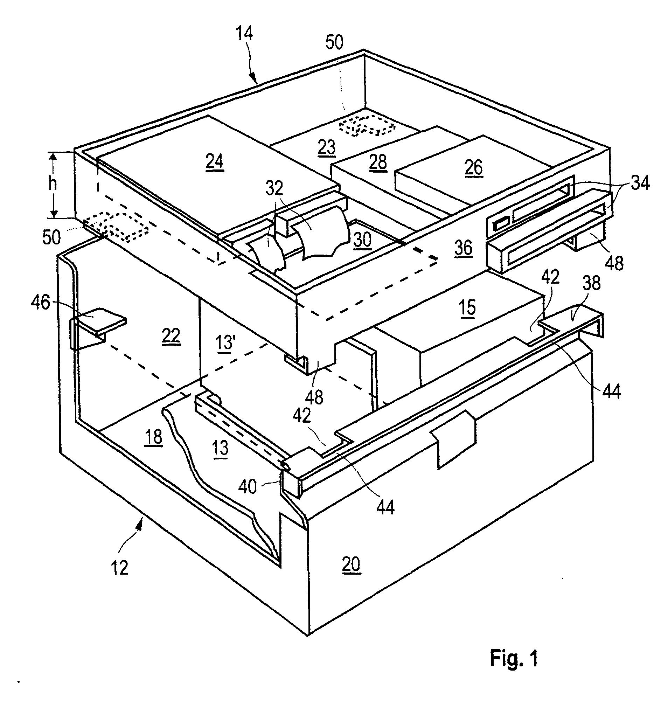

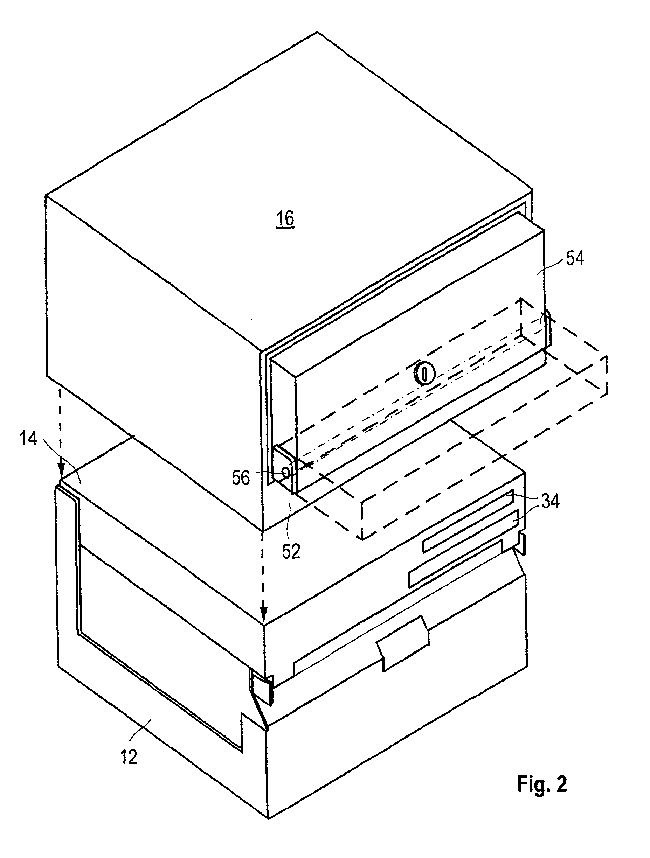

Ein Gerätesystem 10 umfaßt einen Baugruppenträger 12, einen als Peripheriegeräteaufsatz 14 ausgebildeten weiteren Baugruppenträger (Fig. 1) und eine Abdeckhaube 16 (Fig. 2). Der Baugruppenträger 12 besteht im wesentlichen aus einer Grundplatte 18, an die eine Vorderwand 20 und eine Hinterwand 22 angeformt ist. Parallel zu der Grundplatte 18 ist eine Basisleiterplatte 13 angeordnet, auf die eine Zusatzleiterplatte 13' senkrecht aufgesteckt ist. Außerdem ist auf die Grundplatte 18 ein Stromversorgungsgerät 15 aufgesetzt.

Der Peripheriegeräteaufsatz 14 ist ein nach oben offener Kasten, dessen Grundfläche im wesentlichen mit dem des Baugruppenträgers 12 übereinstimmt. In den Peripheriegeräteaufsatz 14 sind ein Festplattenlaufwerk 24, ein Diskettenlaufwerk 26 und ein CD-ROM-Laufwerk 28 eingebaut. Diese Ausstattung stellt nur eine mögliche Peripheriegerätekombination dar. Aus der Bodenplatte 23 des Peripheriegeräteaufsatzes 14 ist eine Durchtrittsöffnung 30 für von den Peripheriegeräten zum Baugruppenträger 12 führende Verbindungsleitungen 32 ausgeschnitten. Bedienungselemente 34 des Diskettenlaufwerks 26 und des CD-ROM-Laufwerks 28 ragen durch die Vorderwand 36 des Peripheriegeräteaufsatzes 14 nach außen.

Die Vorderwand 20 des Baugruppenträgers 12 ist in ihrem oberen Bereich Z-förmig zum Geräteinneren hin und dann nach vorne zurück gebogen, so daß sie eine parallel zur Grundplatte 18 ausgerichtete Auflagefläche 38 für den Peripheriegeräteaufsatz 14 bildet. Aus der Auflagefläche 38 und dem angrenzenden Z-Schenkel 40 der Vorderwand 20 ist rechts und links ein Durchbruch so ausgeschnitten, daß sich in Vorderansicht auf den Baugruppenträger 12 ein Schlitz 42 ergibt. Gegen die Vorderkante der Auflagefläche 38 und damit der Vorderwand 20 ist der Schlitz 42 durch einen schmalen Steg 44 begrenzt.

Die Hinterwand 22 des Baugruppenträgers 12 überragt dessen Vorderwand 20 um die Höhe h des Peripheriegeräteaufsatzes 14. Auf der Baugruppenträger-Innenseite sind an die Hinterwand 22 zwei flache Auflageplatten 46 angesetzt (in Fig. 1 ist nur eine sichtbar), deren Oberfläche in einer Ebene mit der Auflagefläche 38 liegt.

An die Vorderwand 36 des Peripheriegeräteaufsatzes 14 sind zwei die Bodenplatte 23 nach unten überragende vordere Haken 48 angeformt. Diese bilden zusammen mit der Bodenplatte 23 ein liegendes, nach hinten offenes U. Bei der Hinterkante des Peripheriegeräteaufsatzes 14 sind unten an die Bodenplatte 23 zwei hintere Haken 50 angesetzt, die mit der Bodenplatte 23 ebenfalls ein liegendes, nach hinten offenes U bilden.

Der Abstand zwischen den Vorderkanten des freien U-Schenkels der hinteren Haken 50 und der vorderen Haken 48 ist kleiner als der Abstand zwischen der Vorderkante der Auflagefläche 38 bzw. der Außenseite der Vorderwand 20 des Baugruppenträgers 12 und der freien Kante der Auflageplatten 46. Zum Aufsetzen des Peripheriegeräteaufsatzes 14 auf den Baugruppenträger 12 wird ersterer mit seiner Bodenplatte 23 vorne auf die Auflagefläche 38 und hinten auf die Auflageplatten 46 gelegt und nach hinten geschoben. Dabei greifen zuerst die vorderen Haken 48 in die Schlitze 42 ein. In dieser Position kann der Peripheriegeräteaufsatz 14 an dem Baugruppenträger 12 verschwenkt werden. Beim weiteren Zurückschieben des Peripheriegeräteaufsatzes 14 untergreifen die hinteren Haken 50 die Auflageplatten 46. Damit ist der Peripheriegeräteaufsatz 14 auf dem Baugruppenträger 12 fixiert. Er kann in dieser Position durch eine nicht dargestellte, durch die Hinterwand 22 des Baugruppenträgers 12 greifende Schraube oder durch die aufgesetzte Abdeckhaube 16 gehalten werden.

Die Abdeckhaube 16 ist mit Ausnahme ihrer Unter- und Hinterseite geschlossen. Sie wird von oben oder von vorn auf die Zusammenfügung aus Baugruppenträger 12 und Peripheriegeräteaufsatz 14 aufgesetzt. Nach hinten ragt die Abdeckhaube 16 über die Hinterwand 22 des Baugruppenträgers 12 hinaus, so daß Stecker von auf Gegenstecker in der Hinterwand 22 aufgesteckten Kabeln von der Abdeckhaube 16 mit umschlossen werden.

Die Vorderwand 52 der Abdeckhaube 16 ist im Bereich der Vorderwand 36 des Peripheriegeräteaufsatzes 14 mit nicht dargestellten Durchbrüchen für die Bedienungselemente 34 versehen. Zum Schutz gegen unberechtigten Zugriff auf die Peripheriegeräte 26, 28 ist die Abdeckhaube 16 mit einer verschließbaren Abdeckung 54 ausgestattet, die zwischen einer den Vorderwandbereich 36 überdeckenden und einer diesen freigebenden Position verstellbar ist.

Die Abdeckung 54 ist als muldenförmige, um eine horizontale Achse 56 schwenkbare Kappe ausgebildet. Sie kann auch um eine vertikale Achse schwenkbar oder als parallel zu sich selbst verschiebliche Platte ausgebildet sein.

Statt zweier Schlitze 42 kann auch ein breiter Schlitz und statt zweier vorderer Haken 48 ein entsprechend breiter vorderer Haken zum Einsatz kommen. Gleiches gilt für die Auflageplatten 46 und die hinteren Haken 50.

## Patentansprüche

1. Gerätesystem (10) mit einem PC-basierten datenverarbeitenden Gerät und einem daran ankoppelbaren weiteren Baugruppenträger, wobei das datenverarbeitende Gerät einen eine Vorderwand (20) und eine Hinterwand (22) aufweisenden Baugruppenträger (12) umfaßt und das Gerätesystem (10) mit einer dem elektronischen Gerät und dem weiteren Baugruppenträger gemeinsamen Abdeckhaube (16) überdeckbar ist, und wobei der Baugruppenträger (12) für die Aufnahme eines Stromversorgungsgerätes (15) und/oder wenigstens einer Leiterplatte (13, 13') bestimmt ist,
**dadurch gekennzeichnet,**
**daß** der weitere Baugruppenträger als Peripheriegeräteaufsatz (14) für die Halterung wenigstens eines Peripheriegerätes (24, 26, 28) ausgebildet und auf dem Baugruppenträger (12) lösbar und schwenkbar befestigt ist.

2. Gerätesystem nach Anspruch 1, **dadurch gekennzeichnet, daß** der Peripheriegeräteaufsatz (14) um die Oberkante der Vorderwand (20) des Baugruppenträgers (12) schwenkbar ist.

3. Gerätesystem nach Anspruch 1 oder 2, **dadurch gekennzeichnet, daß** aus der Vorderwand (20) des Baugruppenträgers (12) bei deren Oberkante wenigstens ein einen Schlitz (42) bildender, parallel zu dieser ausgerichteter Durchbruch ausgeschnitten und an die untere Vorderkante des Peripheriegeräteaufsatzes (14) ein mit dem wenigstens einen Schlitz (42) korrespondierender, U-förmiger, in Richtung der Hinterwand (22) offener vorderer Haken (48) angeformt ist.

4. Gerätesystem nach Anspruch 1 oder 2, **dadurch gekennzeichnet, daß** an die zum Geräteinneren weisende Seite der Hinterwand (22) des Baugruppenträgers (12) wenigstens eine Auflageplatte (46) angesetzt oder aus dieser freigestanzt und herausgebogen ist und an die Unterseite des Peripheriegeräteaufsatzes (14) wenigstens ein mit dieser korrespondierender, U-förmiger, in Richtung der Hinterwand (22) offener hinterer Haken (50) angeformt ist.

5. Gerätesystem nach den Ansprüchen 3 und 4, **dadurch gekennzeichnet, daß** die Unterseite des Peripheriegeräteaufsatzes (14) durch eine Bodenplatte (23) zumindest teilweise verschlossen ist und der obere U-Schenkel des wenigstens einen vorderen (48) und des wenigstens einen hinteren Hakens (50) durch die Bodenplatte (23) gebildet ist.

6. Gerätesystem nach Anspruch 5, **dadurch gekennzeichnet, daß** der Abstand zwischen den Vorderkanten des freien U-Schenkels des wenigstens einen vorderen Hakens (48) und des wenigstens einen hinteren Hakens (50) kleiner als der Abstand zwischen der Außenseite der Vorderwand (20) des Baugruppenträgers (12) und der freien Kante der Auflageplatte (46) ist.

7. Gerätesystem nach einem der Ansprüche 1 bis 6, **dadurch gekennzeichnet, daß** die Vorderwand (52) der Abdeckhaube (16) im Bereich der Vorderwand (36) des Peripheriegeräteaufsatzes (14) mit wenigstens einem Durchbruch für ein Bedienelement (34) eines Peripheriegerätes (26, 28) versehen ist und daß die Abdeckhaube (16) mit einer Abdeckung (54) versehen ist, die zwischen einer die Vorderwände (20, 36) überdeckenden und einer diese wenigstens teilweise freigebenden Position verstellbar ist.

8. Gerätesystem nach Anspruch 7, **dadurch gekennzeichnet, daß** die Abdeckung als parallel zu sich selbst verschiebliche Platte ausgebildet ist.

9. Gerätesystem nach Anspruch 7, **dadurch gekennzeichnet, daß** die Abdeckung als muldenförmige, um eine horizontale (56) oder vertikale Achse schwenkbare Kappe ausgebildet ist.

## Claims

1. Appliance system (10) having a PC-based data-processing appliance and a further mounting rack which can be coupled to this, the data-processing appliance comprising a mounting rack (12) which has a front wall (20) and a back wall (22) and it being possible for the appliance system (10) to be covered with a covering hood (16) which is common to the electronic appliance and the further mounting rack, and the mounting rack (12) being intended to hold a power supply unit (15) and/or at least one printed circuit board (13, 13'), **characterized in that** the further mounting rack is designed as a peripheral appliance attachment (14) for holding at least one peripheral appliance (24, 26, 28) and is mounted detachably on the mounting rack (12) such that it can pivot.

2. Appliance system according to Claim 1, **characterized in that** the peripheral appliance attachment (14) can be pivoted about the top edge of the front wall (20) of the mounting rack (12).

3. Appliance system according to Claim 1 or 2, **characterized in that** at least one hole is cut out of the top edge of the front wall (20) of the mounting rack (12), said hole forming a slot (42) and being oriented parallel to said top edge, and a U-shaped front hook (48) which corresponds to the at least one slot (42) and is open in the direction of the back wall (22) is integrally formed on the bottom front edge of the peripheral appliance attachment (14).

4. Appliance system according to Claim 1 or 2, **characterized in that** at least one bearing plate (46) is attached to or punched and bent out of that side of the back wall (22) of the mounting rack (12) which faces the inside of the appliance, and at least one U-shaped rear hook (50) which corresponds to said bearing plate and is open in the direction of the back wall (22) is integrally formed on the underside of the peripheral appliance attachment (14).

5. Appliance system according to Claims 3 and 4, **characterized in that** the underside of the peripheral appliance attachment (14) is at least partially closed by a baseplate (23), and the upper U-limb of the at least one front hook (48) and of the at least one rear hook (50) is formed by the baseplate (23).

6. Appliance system according to Claim 5, **characterized in that** the distance between the front edges of the free U-limb of the at least one front hook (48) and of the at least one rear hook (50) is less than the distance between the outer side of the front wall (20) of the mounting rack (12) and the free edge of the bearing plate (46).

7. Appliance system according to one of Claims 1 to 6, **characterized in that** the front wall (52) of the covering hood (16) is provided with at least one hole for a control element (34) of a peripheral appliance (26, 28) in the region of the front wall (36) of the peripheral appliance attachment (14), and **in that** the covering hood (16) is provided with a cover (54) which can be moved between a position which covers the front walls (20, 36) and a position which at least partially exposes them.

8. Appliance system according to Claim 7, **characterized in that** the cover is designed as a plate which can be moved parallel to itself.

9. Appliance system according to Claim 7, **characterized in that** the cover is designed as a trough-shaped cap which can pivot about a horizontal (56) or vertical spindle.

## Revendications

1. Ensemble d'unités (10) comportant une unité de traitement de données de type PC à laquelle peut être raccordé un support de modules supplémentaire, dans lequel l'unité de traitement de données possède un support de modules (12) comportant une paroi avant (20) et une paroi arrière (22) et l'ensemble d'unités (10) peut être recouvert d'un couvercle (16) commun à l'unité électronique et au support de modules supplémentaire, et dans lequel le support de modules (12) est destiné à recevoir une unité d'alimentation en courant (15) et/ou au moins une carte de circuits imprimés (13, 13'),
**caractérisé en ce que** le support de modules supplémentaire se présente sous la forme d'une unité périphérique empilable (14) destiné à supporter au moins une unité périphérique (24, 26, 28) et est fixé sur le support de modules (12) de façon amovible et pivotante.

2. Ensemble d'unités selon la revendication 1, **caractérisé en ce que** l'unité périphérique empilable (14) peut pivoter autour du bord supérieur de la paroi avant (20) du support de modules (12).

3. Ensemble d'unités selon la revendication 1 ou 2, **caractérisé en ce que** dans la paroi avant (20) du support de modules (12) est ménagée, sur son bord supérieur, au moins une ouverture qui forme une fente (42) et qui est parallèle au bord supérieur, et **en ce que** du bord avant inférieur de l'unité périphérique empilable (14) est issu un crochet avant (48) en forme de U, ouvert dans la direction de la paroi arrière (22) et correspondant à ladite au moins une fente (42).

4. Ensemble d'unités selon la revendication 1 ou 2, **caractérisé en ce qu'**une plaque de support (46) est mise du côté de la paroi arrière (22), dirigé vers l'intérieur de l'unité, du support de modules (22), ou bien en est découpée et repliée, et **en ce que** de la paroi inférieure de l'unité périphérique empilable (14) est issu au moins un crochet arrière (50) en forme de U, ouvert en direction de la paroi avant et correspondant à la plaque de support.

5. Ensemble d'unités selon les revendications 3 et 4, **caractérisé en ce que** la paroi inférieure de l'unité périphérique empilable (14) est fermée au moins partiellement par une plaque de fond (23) et la branche supérieure du U de l'au moins un crochet avant (48) et de l'au moins un crochet arrière (50) est formée par la plaque de fond (23).

6. Ensemble d'unités selon la revendication 5, **caractérisé en ce que** la distance entre les bords avant de la branche libre du U de l'au moins un crochet avant (48) et de l'au moins un crochet arrière (50) est inférieure à la distance entre le côté extérieur de la paroi avant (20) du support de modules (12) et le bord libre de la plaque de support (46).

7. Ensemble d'unités selon l'une des revendications 1 à 6, **caractérisé en ce que** la paroi avant (52) du couvercle (16) est dotée dans la partie de la paroi avant (36) de l'unité périphérique empilable (14) d'au moins une ouverture destinée à l'élément opératoire (34) d'une unité périphérique (26, 28), et **en ce que** le couvercle (16) est doté d'un capot (54) qui est mobile entre une position dans laquelle il recouvre les parois avant (20, 36) et une position dans laquelle il la dégage au moins partiellement.

8. Ensemble d'unités selon la revendication 7, **caractérisé en ce que** le capot se présente sous la forme d'un plateau coulissant parallèlement à soi-même.

9. Ensemble d'unité selon la revendication 7, **caractérisé en ce que** le capot se présente sous la forme d'un cache en forme d'auge pivotant autour d'un axe horizontal (56) ou vertical.
